# EUROPÄISCHE PATENTSCHRIFT

(11) **EP 1 459 000 B1**
(45) Veröffentlichungstag und Bekanntmachung des Hinweises auf die Patenterteilung: **12.09.2007**
(21) Anmeldenummer: 02791759.0
(22) Anmeldetag: 02.12.2002
(51) Int. Cl.: F16K 31/122, F16K 41/02

(54) **VENTIL**
VALVE
SOUPAPE

(30) Priorität: 14.12.2001 DE 10161388
(43) Veröffentlichungstag der Anmeldung: 22.09.2004
(73) Patentinhaber: Jähn, Peter, 51375 Leverkusen (DE)
(72) Erfinder: JÄHN, Peter, 51375 Leverkusen (DE); KRAUTKRÄMER, Rainer, 51469 Bergisch Gladbach (DE); FERVER, Emil, 51373 Leverkusen (DE)
(74) Vertreter: COHAUSZ DAWIDOWICZ HANNIG & SOZIEN
(86) Internationale Anmeldenummer: PCT/EP2002/013600
(87) Internationale Veröffentlichungsnummer: WO 2003/052308

(56) Entgegenhaltungen:
- GB-A- 1 216 701
- US-A- 3 624 802
- US-A- 3 958 592
- US-A1- 2002 024 034

## Beschreibung

Die Erfindung betrifft ein Ventil mit pneumatischem oder hydraulischem Antrieb mit einem das Ventilgehäuse durchsetzenden Durchflusskanal, einem Ventilsitz im Durchflusskanal und einem relativ zum Ventilsitz beweglichen Verschlussmittel, einem mit dem Verschlussmittel verbundenen Kolben, der in einem Hohlraum, insbesondere einem Zylinderraum beweglich geführt ist, sowie einer oberen Fluiddruckleitung, die mit dem oberen Hohlraumteil und einer unteren Fluiddruckleitung, die mit dem unteren Hohlraumteil verbunden ist, wobei das Verschlussmittel durch eine Zentrierplatte oberhalb des Durchflusskanals durchgeführt ist, welche den Druckentlastungsraum und Dichtmittel, insbesondere Dichtungsringe aufweist, die den Druckentlastungsraum vom Durchflusskanal und dem unteren Hohlraumteil trennen.

Ein derartiges Ventil ist z.B. aus dem US-Patent US 3,624,802 bekannt.

Ansteuerbare miniaturisierte Prozessarmaturen (Ventile) für hohe Drücke, z.B. größer 300 bar, sind gewöhnlich mehrfach geteilt, in einen Ventilkörper, den elektrischen oder pneumatischen Antrieb und eine verbindende Montageeinheit. Das bedingt räumlich große Bauformen der Armaturen. Besteht die Anforderung, dass bei Steuerenergieausfall das Ventil in eine definierte Sicherheitsstellung geht, werden die Ventilantriebe und damit das steuerbare Ventil überproportional größer. Für automatisierte und miniaturisierte Versuchsanlagen werden ansteuerbare gasdichte Ventile mit räumlichen Abmessungen von kleiner 50 ml benötigt, damit ein kompakter Anlagenaufbau möglich ist. Aus diesem Grund sind insbesondere bekannte steuerbare Ventile für den Einsatz in miniaturisierte und automatisierte Versuchsanlagen zu groß und deshalb nicht geeignet. Alle bekannten Ventile sind im konstruktiven Aufbau sehr ähnlich.

Der konstruktive Aufbau bekannter Ventile variiert in der Regel in der Ausgestaltung des Dichtsitzes, wobei die Form von Ventilstößel und Ventildichtsitz, sowie die Materialkombination von Ventilstößel und -dichtsitz variiert wird. Ventile sind primär für eine stetige Regelaufgabe gedacht, so dass im geschlossenen Zustand eine hohe Dichtigkeit nicht immer gefordert ist. In vielen Produktionsanlagen sind deshalb nach- und vorgeschaltete AUF/ZU-Armaturen installiert.

Funktionsfähige Ventile müssen im geschlossenen Zustand im Produktdurchgang und nach außen dicht sein. Deshalb sind Dichtigkeitsanforderungen insbesondere bei hohen Schaltzyklen an den Ventilsitz und an die Ventilspindeldichtung zu stellen. Beide notwendigen und funktionswichtigen Dichtstellen benötigen eine hohe Dichtkraft um gegen anstehende hohe Prozessdrücke zu dichten. Die Summe aus Dichtkraft und Reibkraft im Ventil bestimmen die Größe des erforderlichen pneumatischen Antriebes. Das führt in der Regel zu sehr großen Stellantrieben.

Eine Möglichkeit für die Konstruktion eines drucksicheren Ventils wird in der Offenlegungsschrift EP 742 398 A1 beschrieben.

Dieses Ventil weist einen mit kompressiblen Stützmedium gefüllten Hohlraum auf, durch den die Ventilspindel bewegt wird und der mittels einer elastischen Membran vom Durchflusskanal des Ventils getrennt ist.

Der Nachteil einer solchen Konstruktion ist, dass bei einer vergleichsweise hohen Zahl von Betätigungen des Ventils (>10 000 Schaltzyklen) die Membran undicht werden oder reißen kann. Dann tritt Produkt aus dem Durchflusskanal oder Ventilprozessraum in den Zwischenraum zwischen Ventilspindel und Ventilkörper und letztlich auch gegebenenfalls in die Umgebung aus.

Ventile müssen für eine vollständige Schließbewegung zwischen den Endstellungen AUF und ZU große Wege zurück legen, dadurch wird der konstruktive Aufbau einer Spindeldichtung, insbesondere bei herrschenden hohen Prozessdrücken, kompliziert und aufwendig. Es kommen z.B. mehrlagige oder Mehrfachdichtungen mit federnder Nachstellmöglichkeit zum Einsatz. Die Nachstellmöglichkeit einer Spindelabdichtung kompensiert den, bei der Hin- und Herbewegung der Spindel, entstehenden Dichtungsabrieb, so dass die Spindeldichtung durch eine federnde Komponente nachgedrückt wird und weiterhin dicht bleibt. Ist ein Ventil mit derartiger Dichtungskonstruktion eingesetzt, so ist die Standzeit der Dichtung bei kontinuierlichen Prozessbedingungen und geringer Bewegungshäufigkeit der Ventilspindel recht groß, weil praktisch kein Verschleiß an der Spindelabdichtung entsteht. Wird jedoch dieses Ventil für eine Aufgabe eingesetzt bei der ständig der maximale Stellbereich (Stellweg) durchlaufen wird, so dass das Ventil ständig zwischen den Endstellungen AUF und ZU bewegt wird, entsteht ein großer Abrieb an der Spindeldichtung, so dass eine konstruktive Nachstellmöglichkeit sich schnell verbraucht und die Spindeldichtung nicht mehr dicht ist und eine Leckage entsteht. Daraus resultiert, dass derartige Konstruktionen von Spindelabdichtungen in Ventilen für hohe Prozessdrücke, wie z. B. 300 bar Wasserstoff, nicht geeignet sind.

Aufgrund dieser Problematik gibt es Membran- und Faltenbalgventile, wie das oben beschriebene, die keine nachstellbare Ventilspindeldichtung benötigen und eine dauerhafte Dichtigkeit vom Prozessraum zur Atmosphäre garantieren sollen. Diese Ventile benötigen große Verstellkräfte, weil die Membranen oder Faltenbälge aus metallischen Werkstoffen bestehen um den hohen Prozessdrücken von z.B. größer 300 bar standhalten zu können. Sind neben den hohen Druckdifferenzen zusätzlich hohe Schaltfrequenzen, z.B. 10 bis 60 Schaltungen pro Minute, gefordert, sind Membranen und Faltenbälge einer hohen Wechselbeanspruchung ausgesetzt. Die Wechselbeanspruchung erzeugt große Materialspannungen im Werkstoff der Membranen bzw. der Faltenbälge, so dass bei miniaturisierten Ventilen es schnell zur Materialermüdung und somit zum Versagen der Metalldichtungskomponenten kommt. Die mechanische Beanspruchung der Membranen und der Faltenbälge kann verringert werden, indem ihre Abmessungen vergrößert werden und sich dadurch die spezifische Belastung verkleinert. Die konstruktive Vergrößerung der Membran oder des Faltenbalges bewirkt eine Erhöhung des Kraftaufwandes für die Ventilspindelbewegung, so dass die Baugröße des Stellantriebes und somit des steuerbaren Ventils zunimmt. Derartige Ventile sind für kompakte miniaturisierte Versuchsanlagen nicht geeignet.

Ein weiteres Problem ist die Dichtigkeit des Ventilsitzes. Bekannte Ventile dichten im Durchgang über eine konzentrische Fläche ab. Eine flächige Abdichtung erfordert hohe Anpresskräfte um die Gasdichtigkeit bei hohen anstehenden Druckdifferenzen von z.B. größer 300 bar zu erreichen. Der Verschluss des Ventildurchganges bildet sich gewöhnlich aus dem Sitz im Ventilgehäuse und dem unteren Teil der Ventilspindel. Der Dichtsitz im Gehäuse ist dabei feststehend und der untere Teil der Spindel, die sog. Spindelspitze wird mit dem Stellantrieb in den Dichtsitz des Gehäuses gedrückt damit der Ventildurchgang verschlossen wird. Ein horizontale flächige Abdichtung des Ventildurchgangs gleicht eine parallele Achsenverschiebung zwischen Spindel und Gehäusesitz in kleinen Bereichen aus, so dass geringe Fertigungstoleranzen kompensiert werden. Die Spindelspitze und der Ventilsitz bilden eine dichtende passgenaue Verschlussstelle, insbesondere dann, wenn die Ventilspindelspitze einen weicheren Werkstoff-Dichtring besitzt und das weiche Material durch plastische Verformung die Form der Gegenfläche des Gehäusedichtsitzes annimmt. Kommt es durch hohe Schalthäufigkeit zu einem erhöhten Verschleiß im Bereich der Spindelabdichtung, vergrößert sich die ursprüngliche geringe Lagetoleranz wesentlich und die Spindelspitze kann nicht mehr in den zuerst gebildeten passgenauen Dichtsitz hinein fahren und den Ventildurchgang dicht verschließen. Dieses nicht passgerechte Verschließen nach dem ersten Verschleiß im Dichtungsbereich der Spindel, kann wiederum ausgeglichen werden, indem der Stellantrieb größer dimensioniert wird. Mit erhöhter Kraft wird eine neue nachträgliche Verformung des dichtenden weicheren Materials an der Spindelspitze ermöglicht. Gleiche Vorgänge finden statt, wenn ein weicheres Material im Ventilsitz anstatt an der Ventilspindelspitze eingesetzt wird. Die so ausgeführten Ventiltypen haben nur eine geringe Standzeit bei hohem vom Gas aufgebrachtem Differenzdruck und schnellen häufigen Schaltzyklen.

Manche Ventildurchgänge bzw. Ventildichtsitze sind so gestaltet, dass über eine konzentrische Linie gedichtet wird. Auch in diesen Fällen sind Materialkombinationen Stand der Technik. Derartige Ausführungen der Ventil-Dichtsitze benötigen zwar geringere Schließkräfte, so dass der erforderliche Stellantrieb klein ist, aber die Lageempfindlichkeit hinsichtlich eines Winkelversatzes zwischen Ventilspindel und Dichtsitz ist wesentlich vergrößert. Die geringste Achsen - Veränderung im Bereich der Ventilspindelführung und der Spindelabdichtung verändert die Lage der konzentrischen Linienabdichtung und es kommt zu Leckagen im Ventildurchgang.

Untersuchungen an diversen marktgängigen Ventilen bestätigten, dass bei einer Belastung mit Wasserstoff unter einem Druck bis zu 300 bar bei gleichzeitig hohen Druckdifferenzen eine anfänglich hohe Dichtigkeit, gegeben war. Aufgrund der schnellen und hohen Schalthäufigkeit zeigten die Ventile jedoch nach weniger als 10 000 Lastspielen erste Leckagen. Ventile, die bei noch höheren Schaltzyklen dicht waren, hatten einen wesentlich größeren Antrieb und große Ventilbauformen, so dass ein Einsatz in miniaturisierte Anlagen zu aufwendig und zu kostenintensiv ist.

Der vorliegenden Erfindung liegt deshalb die Aufgabe zugrunde ein pneumatisch ansteuerbares Ventil zu finden, welches z.B. bei extremen Prozessanforderungen von z.B. größer 300 bar Druck und Wasserstoff als Prozessgas und gleichzeitig hohem Differenzdruck von z.B. größer 100 bar noch bei einer Anzahl von mindestens 100 000 Schaltzyklen gasdicht ist. Das Ventil soll eine kleine Bauform haben. Zusätzlich soll die erforderliche Schaltzeit für eine AUF-/ZU-Bewegung des Ventils extrem gering ist. Das Ventil soll bei maximaler Dauerbelastung einen geringen Verschleiß haben. In besonderen Anwendungsfällen soll insbesondere die Möglichkeit bestehen, eine. Feder im pneumatischen Kopf einzusetzen ohne den Miniaturisierungsgrad zu verändern, so dass bei Steuerluftausfall das Ventil eine vorgegebene Sicherheitsstellung annimmt. Der Aufbau des Ventils soll Fertigungs- und Lagetoleranzen weitestgehend kompensieren, so dass bei hohem Miniaturisierungsgrad Ventilkosten stark reduziert werden.

Bevorzugt soll die Konstruktion reparaturfreundlich und wartungsfreundlich sein, so dass bei einem Ventilausfall eine einfache Reparaturmöglichkeit gegeben ist. Das Ventil soll einfach herstellbar sein, so dass selbst bei einer Einzelanfertigung es zu einem deutlichen Kostenvorteil gegenüber marktgängigen Ventilen kommt.

In chemischen Prozessen werden häufig korrosionsbeständige Werkstoffe in Form von hochwertigen Metall-Legierungen eingesetzt, so dass auch die Forderung nach einer preiswerten z.B. aus Hastelloy^{®} bestehenden Armatur besteht.

Gelöst werden diese Aufgaben durch ein Ventil nach Anspruch 1. Gegenstand der Erfindung ist ein Ventil mit pneumatischem oder hydraulischem Antrieb mit einem das Ventilgehäuse durchsetzenden Durchflusskanal, einem Ventilsitz im Durchflusskanal und einem relativ zum Ventilsitz beweglichen Verschlussmittel, welches aus zwei Komponenten besteht, der Ventilspindel mit einseitig fest verbundenem Kolben und gegebenenfalls einem separaten allseitig frei beweglichen Schließkörper, wobei der Kolben in einem Hohlraum, insbesondere einem Zylinderraum, angeordnet ist und den Hohlraum in oberen und unteren Hohlraum teilt und dort beweglich geführt ist, sowie einer Fluiddruckleitung verbunden mit dem oberen Hohlraumteil und einer unteren Fluiddruckleitung, die mit dem unteren Hohlraumteil verbunden ist, wobei das Verschlussmittel durch eine Zentrierplatte oberhalb des Durchflusskanals durchgeführt ist, welche einen Druckentlastungsraum aufweist und Dichtmittel, insbesondere Dichtungsringe aufweist, die den Druckentlastungsraum vom Durchflusskanal und vom unteren Hohlraumteil trennen.

Das Ventil mit integriertem pneumatischen Antrieb hat z.B. einen modularen plattenförmigen Aufbau mit mindestens drei Platten, dazu zählt eine untere Grundplatte, eine angrenzende mittlere Gehäuseplatte und eine aufgesetzte obere Kopfplatte. Die Platten sind insbesondere im Innern mit rotationssymmetrischen zentrierenden Einbauteilen und einem Pneumatikkolben mit einseitig verlängerter Ventilspindel zusammengesteckt, und alle Einbauteile sind untereinander mit elastischen Dichtungen abgedichtet, so dass vier getrennte und unterschiedlich druckbeaufschlagte Räume oder Kammern entstehen, das sind der obere und der untere Hohlraum (Pneumatikraum), ein druckloser Trennraum (Druckentlastungsraum) und der prozessseitige Hochdruckraum (Durchflusskanal). Die einseitig verlängerte Ventilspindel ermöglicht zwischen drei druckbeaufschlagten Räumen eine Kraftübertragung, so dass die wirkende Kraft aus dem oberen oder unteren Pneumatikraum in den Prozessraum (Durchflusskanal) übertragen wird und dadurch ein z.B. allseitig frei beweglicher Schließkörper in einen Ventilsitz gepresst oder freigegeben wird und dadurch der Durchgang des Ventils geöffnet oder geschlossen wird. Prinzipiell kann aber auf den allseitig frei beweglichen Schließkörper verzichtet werden, wenn die Ventilspindel für die Verdichtung des Ventilsitzes passend ausgestaltet wird.

Ein solches dicht schließendes, modular aufgebautes Ventil genügt allen Anforderungen hinsichtlich großer Differenzdrücke, aufgebracht durch verdichtete Gase mit hohen Diffusionskoeffizienten, wie z.B. Wasserstoff. Die Differenzdrücke betragen bis zu 350 bar und das Ventil hat eine, bedingt durch den kleinen oberen Pneumatikraum, geringe Schließzeit.

Die vorliegende Erfindung betrifft ein Ventil mit pneumatischem oder hydraulischem Antrieb, dadurch gekennzeichnet, dass eine Kopfplatte 1 auf einer Gehäuseplatte 2 und diese wiederum auf einer Grundplatte 6 mittels lösbarer oder unlösbarer Befestigungsmittel montiert ist,
- die Kopfplatte im Inneren einen Zylinderraum bildet der durch einen Kolben 3 in einen oberen Pneumatikraum 32 und einen unteren Pneumatikraum 33 geteilt wird und einen oberen Energie-Anschluss 26 und einen unteren Energie-Anschluss 27 aufweist,
- mit einer Ventilspindel oder Kolbenspindel 31 die am Kolben 3 befestigt ist und die durch eine den unteren Pneumatikraum 33 abschließende Verschlussplatte 4 und eine Kolbenspindel-Dichtung 13 geführt wird womit der untere Pneumatikraum 33 zur Ventilspindel (oder Kolbenspindel) hin abgedichtet wird, auf deren Oberseite ein runder Bolzen 22 aufliegt der abgedichtet durch Dichtungen 11 innerhalb eines Gewinderinges 9 mit einer äußerlich einstellbaren Herstellschraube 10 zur Einstellung des Hubs der Ventilspindel (oder Kolbenspindel) bzw. Endpunktes des Kolbens 3 verbunden ist,
- einer Zentrierplatte 5 deren Oberseite in der Verschlussplatte 4 und deren Unterseite in der Gehäuseplatte 2 sitzt die eine Passage für die Ventil- oder Kolbenspindel 31, eine Ventilspindel-Dichtung 16 sowie eine radikale Bohrung 34 aufweist die wiederum mit der Passage für die Ventil- oder Kolbenspindel verbunden ist sowie einer umlaufenden Nut 35 an der Peripherie der Zentrierplatte 5 die wiederum mit der radialen Bohrung 34 in Verbindung steht und einer radialen Gehäusebohrung 30, wobei die Ventilspindel oder Kolbenspindel in der Mitte der Verschlussplatte 4 an den genannten Bohrungen vorbei zum Durchströmkanal führt der aus einer Zuleitung 28 in der Grundplatte 6, einer ableitenden Bohrung 29 in der Gehäuseplatte 2, einer zuführenden Bohrung 37 durch das Gehäuse 8 des Ventilsitzes und dem Ventilsitz 7 selber, einer Bohrung 36 zur Aufnahme gegebenenfalls eines allseitig freibeweglichen Schließkörpers 25 und einem Ringspalt 23 besteht, und der Ventilsitz 7 durch Dichtungen 17 zur Kopfplatte 1, mit Dichtungen 18 zum Gehäuse 8 des Ventilsitzes und der wiederum durch Dichtungen 19 zur Grundplatte 6 abgedichtet ist.

Befestigungsmittel im Sinne der vorliegenden Erfindung können lösbare oder unlösbare Befestigungsmittel sein, die dazu dienen, die einzelnen Ventilbauteile untereinander zu befestigen.

Soll das Ventil nach Montage demontierbar sein, dann sollten lösbare Befestigungselemente wie z.B. Schrauben, Bolzen mit Muttern, Gewindestangen, oder sonstige Spannelemente verwendet werden.

Sollen die zusammengesetzten Ventileinzelteile nach dem Zusammenbau unlösbar miteinander verbunden werden, kann ein nachträgliches Einstellen des Hubweges der Ventilspindel auf spezielle Prozess-Anforderungen erfolgen. Unlösbare Verbindungselemente sind z.B. Nieten, Verschweißen von Bolzen oder Gewindestangen.

Das Ventilgehäuse aus Kopfplatte 1, Verschlussplatte 4, Zentrierplatte 5, Ventilsitz 7, Gehäuse des Ventilsitzes 8 sowie der Grundplatte 6 besteht bevorzugt aus Metall. Besonders bevorzugte Materialen sind Chrom-Nickel-Stähle, Nickel-Legierungen und Nicht-Eisen-Werkstoffe für die prozessseitigen Ventilbauteile. Messing oder Aluminium können auf der Pneumatikseite des Ventils eingesetzt werden.

Von den vier untereinander getrennten Räumen sind im Betrieb mindestens zwei ständig mit einem unterschiedlichen Druck beaufschlagt.

Das Ventil hat mehrere Druckräume. Der oberste Druckraum ist der Pneumatikraum 32, dann folgt der untere Pneumatikraum 33. Die Pneumatikräume können auch als Niederdruckräume bezeichnet werden. Dann folgt der Druckentlastungsraum, vielleicht besser bezeichnet als druckloser Raum, da vom Inneren des Ventils eine Verbindung zur äußeren drucklosen Atmosphäre besteht. Unterhalb des drucklosen Raums befindet sich der Hochdruck- oder Prozessraum mit dem Durchflusskanal. Über dem Druckentlastungsraum oder drucklosen Raum können beim Versagen der Dichtungen 16, Leckagen direkt abgeleitet werden, so dass kein Produkt vom Prozessraum in den Pneumatikraum gelangen kann.

Der drucklose Raum kann benutzt werden um z.B. einen inerten Stoff, gegebenenfalls mit höherem Druck als der vorliegende Prozessdruck, zwischen Prozessraum (Durchflusskanal) und Pneumatikraum aufzubringen. Insbesondere bei sehr toxischen Produkten muss häufig sichergestellt werden, dass keine Substanzen in die Atmosphäre gelangen.

Der Druckentlastungsraum kann mit einem inerten Gas oder einer inerten Flüssigkeit beaufschlagt werden, um einen Sperrdruck zwischen Prozess- und unterem Pneumatikraum aufzubringen.

Der aufgebrachte Sperrdruck kann mit einem Drucksensor überwacht werden, so dass bei abweichendem Druck eine Alarmierung erfolgt und ein Prozess automatisch in eine Sicherheitsstellung gebracht wird.

Das pneumatisch oder hydraulisch gesteuerte Ventil übernimmt gleichzeitig bei vertikalem Einbau und Verwendung eines allseitig freibeweglichen Schließkörpers im Dichtsitz, die Aufgabe eines Rückschlagventils, so dass bei plötzlich auftretendem umgekehrten Differenzdruck, d.h., dass der in der ableitenden Gehäusebohrung wirkende Prozessdruck größer ist als der anstehende Druck in der Zuleitung der Grundplatte, eine Rückströmung aus dem Prozess verhindert wird. Die Funktion des Rückschlagventils kann aufgehoben werden, wenn man auf den allseitig freibeweglichen Schließkörper verzichtet oder wenn das Ventil bei der Montage um 180 Grad verdreht eingebaut wird, so dass die Kopfplatte unten positioniert ist.

In einer bevorzugten Ausführung des Ventils ist die von den Druckfluiden mit Druck beaufschlagte Fläche des Kolbens und die daraus resultierende Kraft im Verhältnis zum Querschnitt der dichtenden Fläche des Ventilsitzes mindestens so groß bemessen, dass die Ventilspindel bei Druckbeaufschlagung des oberen Hohlraumes dem Druck im Einlassbereich des Durchflusskanals entgegenwirkt und eine Durchströmung des Durchflusskanals verhindert

In einer bevorzugten Ausführung ist, nach der Montage des Kolbens mit einseitig verlängerter Spindel, die verbliebene freie Höhe des unteren und oberen Hohlraums der Kopfplatte gleich groß und so gewählt ist, dass der gesamte Öffnungsweg 0,01 mm bis 10 mm ist, bevorzugt 0,01 mm bis 5 mm ist und besonders bevorzugt kleiner 1 mm ist.

Das Querschnitts-Flächenverhältnis des Pneumatikkolbens zur Querschnittsfläche der Ventilspindel beschreibt quasi die Verstärkung der Ventil-Schließkraft. Ausgehend vom anstehenden Prozessdruck unter dem Schließkörper und der daraus resultierenden Kraft, sollte die auf den Schließkörper wirkende Kraft der Ventilspindel um den Faktor 2 größer sein, als die gegenwirkende Prozesskraft (anstehender Prozessdruck).

Daraus folgt: das Querschnittsflächenverhältnis ist >2 bis <100; bevorzugt >2 bis <50 und besonders bevorzugt >2 bis <20.

Die Dichtmittel im Ventil im Bereich der Spindel sind insbesondere unabhängig voneinander als elastische Weichringe, Rundschnurringe, Lippendichtungen, elastische Formdichtungen oder insbesondere als Gleitdichtung ausgebildet.

Besonders bevorzugt wird als Material für die Dichtmittel Elastomere wie Silikon, Viton^{®}, Teflon^{®} oder ein EPDM-Kautschuk verwendet, wobei die Querschnittsformen der Dichtungsringe rund, quadratisch oder auch andere spezielle Querschnittsformen haben können.

Bevorzugt ist somit ein Ventil, bei dem das Ventilgehäuse mehrteilig ausgeführt ist und mindestens eine Aufteilung in eine Kopfplatte zur Aufnahme des Hohlraumes, eine Gehäuseplatte zur Aufnahme des Druckentlastungsraumes und des Durchflusskanals sowie eine Grundplatte besteht.

Besonders bevorzugt ist eine Variante, in der der Ventilsitz vom Ventilgehäuse lösbar angebracht ist.

Das Querschnitts - Flächenverhältnis des Pneumatikkolbens zur Querschnittsfläche der einseitig verlängerten Ventilspindel im Bereich des Ventilsitzes ist 2 bis 100, bevorzugt 2 bis 50 und besonders bevorzugt 2 bis 20.

Die wirksame druckbeaufschlagte Fläche des Kolbens mit einseitig angesetzter Ventilspindel mit geringerer Querschnittsfläche bewirkt eine positive Kraftübersetzung und Kraftübertragung auf den allseitig freibeweglichen Schließkörper und dessen wirksame dichtende Fläche, so dass das Ventil selbst bei hohen Differenzdrücken mit einer niedrigen Stellkraft dicht verschlossen werden kann.

Das Ventil besitzt im oberen Teil des Ventilgehäuses eine Verstellschraube 10, z.B. eine Verstellspindel, besonders bevorzugt eine Mikrometerschraube. Mit dieser wird der obere Endpunkt des Kolbens und damit der Hub der Ventilspindel eingestellt oder begrenzt.

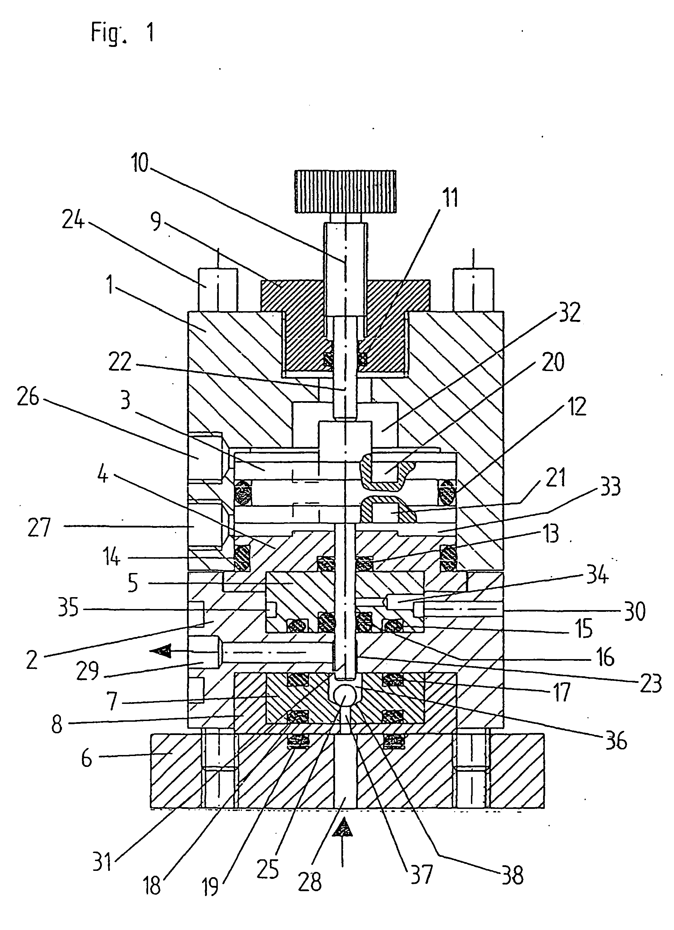

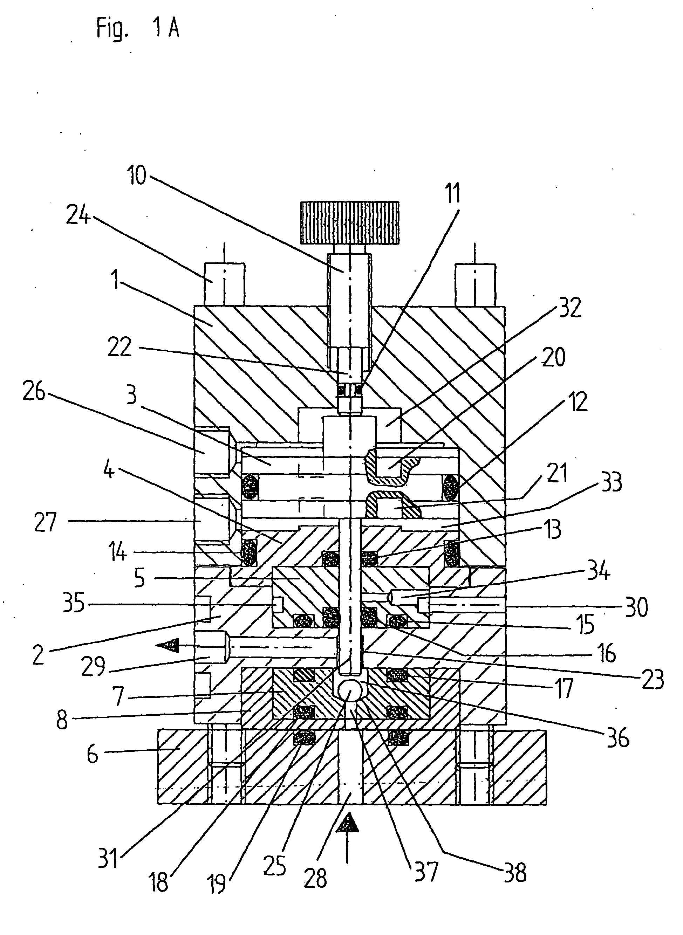

Die Verstellschraube 10 sitzt in Fig. 1 im Gewindering 9 der Verstellschraube. Der Gewindering kann auch als Scheibe mit äußerem Gewinde zur Aufnahme der Versstellschraube 10 bezeichnet werden.

Mit der Verstellschraube 10 kann der maximale Weg des Pneumatikkolbens mit Ventilspindel reduziert werden, so dass bei hohen Differenzdrücken der Kolbenweg, zwischen AUF- und ZU-Stellung des Ventils minimiert ist und dadurch ein Abrieb an der Spindeldichtung vermindert wird und die Standzeit des Ventils wesentlich vergrößert wird.

In einer Ausführungsvariante der vorliegenden Erfindung kann der Gewindering 9 entfallen, wenn die elastische Dichtung 11 in die Verstellschraube 10 integriert würde (siehe Fig. 1A).

Die Verstellschraube 10 mit elastischer Dichtung 1 ist primär nur erforderlich um sehr kleine Schaltwege des Kolbens einstellen zu können. Das bezieht sich vorrangig auf sehr kleine Schaltwege zwischen 0,05 mm bis kleiner 1 mm. Sehr kleine Schaltwege sind erforderlich um bei sehr hohen Differenzdrücken, den Verschleiß der elastischen Dichtungen 16 sehr stark herabzusetzen. Genauer gesagt, aufgrund des extrem kleinen Schaltweges der Ventilspindel, erfolgt eine Dichtungsbelastung nur im Verformungsbereich der elastischen Dichtung 16.

Zusätzlich ermöglicht die Verstellschraube 10, bei einzelnen Ventilbauteilen, die konstruktiv einen größeren Schaltweg des Kolbens erlauben, den Schaltweg nachträglich zu verkleinern und einen Einsatz bei hohen Differenzdrücken zu ermöglichen.

Des Weiteren ermöglicht die Verstellschraube ein Begrenzen der maximalen Durchflussmenge des Ventils im eingebauten Zustand. Die praktischen Arbeiten im Rahmen der vorliegenden Erfindung führten zu der Erkenntnis, dass bei Schaltwegen <10 mm bis >5 mm die Verstellschraube für das Einstellen des gewünschten Durchflusses im montierten Zustand bzw. in der montierten Rohrleitung am besten genutzt werden kann. Bei Schaltwegen <5 mm bis >1 mm dient die Verstellschraube sowohl zur Einstellung des Durchflusses und Minimierung als auch des Verschleißes der elastischen Spindeldichtung und bei Schaltwegen <1 mm bis >0,05 mm dient die Verstellschraube zur Begrenzung des Durchflusses und zur Minimierung des Dichtungsverschleißes nach dem montierten Zustand des Ventils und bei Vorliegen von hohen Differenzdrücken.

In einer bevorzugten Ausführung des Ventils ist der Öffnungs- und Schließweg so bemessen, dass die Eigenverformung der elastischen Dichtungen an der Ventilspindel und am Kolben genutzt wird, um das Ventil verschleißarm zu öffnen und zu schließen.

Die Länge des Kolbenwegs verhält sich insbesondere umgekehrt proportional zum Differenzdruck zwischen Ein- und Austrittsöffnung des Ventils, und ist bevorzugt höchstens 10 mm, besonders bevorzugt höchstens 5 mm und insbesondere besonders bevorzugt höchstens 1 mm.

Das Ventil besitzt in einer bevorzugten Ausführung einen allseitig frei beweglichen Schließkörper, der in verlängerter Achse des Pneumatikkolbens mit einseitig verlängerter Ventilspindel sitzt. Der Schließkörper sitzt z.B. in einer Vertiefung (= Bohrung 36) der Verschlussplatte 4 mit dem Ventilsitz 7 und die Breite des konzentrischen Ringspaltes, gebildet durch den Durchmesser der Vertiefung und dem Durchmesser der Ventilspindel, ist kleiner als der Durchmesser des beweglichen Schließkörpers.

Die Bohrung 36 mündet in der zuführenden Bohrung 37 die den Ventilsitz 7 durchquert und wodurch das zu fördernde Medium aus der Zuleitung 28 der Grundplatte angesaugt wird.

Bevorzugt ist ein Ventil, bei dem die Dichtsitzfläche 38 des Ventilsitzes eben oder insbesondere konisch verengt ausgeführt ist. Der allseitig freibewegliche Schließkörper ist bevorzugt als Kugel, Zylinder, Scheibe oder Kegel ausgeführt.

Die Höhe der Vertiefung in der Verschlussplatte 4 mit Ventilsitz 7 zur Aufnahme des allseitig freibeweglichen Schließkörpers 25 ist in einer bevorzugten Bauform des Ventils kleiner als die zweifache Höhe des Schließkörpers, bevorzugt kleiner als die Höhe des Schließkörpers und besonders bevorzugt kleiner als die halbe Höhe des Schließkörpers.

Der Durchmesser der Vertiefung oder Senkbohrung in der Verschlussplatte 4 ist kleiner als der 2fache -Durchmesser des Schließkörpers, bevorzugt kleiner als der 1,5fache - Durchmesser des Schließkörpers und besonders bevorzugt kleiner als der 1,3fache - Durchmesser des Schließkörpers.

Der Winkel α beträgt im Falle der konisch konzentrischen Dichtfläche im Ventil zur Horizontalen gesehen bevorzugt 0 bis 70 Grad, besonders bevorzugt von 30 bis 60 Grad und ganz besonders bevorzugt von 40 bis 50 Grad.

Die Materialien des Ventilsitzes 7 können aus thermoplastischen Kunststoffen gegebenenfalls auch aus metallischen Werkstoffen sein. Voraussetzung ist die Korrosionsbeständigkeit gegen zu regulierende Medien.

Der Schließkörper des Ventils kann aus verschieden Materialien bestehen, z.B., aus Stahl, Hastelloy^{®}, Glas, Keramik bzw. aus Kunststoff.

Die Materialien des Ventilsitzes 7 und des Schließkörpers 25 sind in einer bevorzugten Ausführung unterschiedlich. Vorzugsweise hat der Schließkörper eine höhere Oberflächenhärte als der Ventilsitz.

Der allseitig freibewegliche Schließkörper ist ein Teil des Durchflusskanals auf der Produktseite oder Prozessseite des Ventils. Der Durchflusskanal erstreckt sich über mehrere Ventilbauteile und bildet sich aus der Zuleitung 28 in der Grundplatte 6, der zuführenden Bohrung 37 und der erweiterten Bohrung 36 im Ventilsitz 7, der weiteren Bohrung 23 in der Gehäuseplatte 2 um dann mit der ableitenden Bohrung 29 des Gehäuses 2 zu enden.

Die zuführende Bohrung 37 erweitert sich in den Abschnitt 36 um die Dichtfläche 38 des Ventilsitzes auszubilden und später den Schließkörper 25 aufnehmen zu können.

Der weitere Durchflusskanal-Abschnitt 23 bildet im montierten Zustand mit der Ventilspindel 31 den Ringspalt 23.

Der im Zylinderraum der Kopfplatte positionierte Kolben kann mit zusätzlichen Druckfedern ausgerüstet sein, um z.B. bei Steuerluftausfall eine gewünschte Sicherheitsstellung anzunehmen.

Bevorzugt ist ein Ventil, bei dem im oberen Hohlraumteil ein Federelement angebracht ist, das auf die Ventilspindel in Richtung des Ventilsitzes wirkt, oder im unteren Hohlraumteil ein Federelement angebracht ist, das auf die Ventilspindel entgegengesetzt zum Ventilsitz wirkt.

Der Schließkörper ausgebildet als Ventilplatte hat in einer bevorzugten Variante eine zusätzliche elastische Dichtung um den Ventildurchgang dicht zu verschließen.

Bevorzugt ist eine Ausführung des Ventils, bei welcher die Fluiddruckleitungen mit Druckluft betrieben sind.

Bevorzugt ist eine Ausführung des Ventils, in dem ein separierbares Filter- bzw. Siebgewebeelement im Bereich der Zuleitung vor dem Dichtsitz, insbesondere zwischen Grundplatte und Dichtsitz eingebaut ist.

Der Einbau eines Filters hält Schmutzpartikel und sonstige harte Fremdpartikel zurück, so dass insbesondere ein weicher Dichtsitz oder elastische Dichtungen nicht beschädigt werden.

Das erfindungsgemäße Ventil kann natürlich in vertikaler als auch in horizontaler Lage montiert und zum Einsatz kommen.

Insbesondere die vertikale Einbausituation, wobei der Pneumatikraum oben liegt, hat Vorteile bei Anwendungen mit hohem Differenzdruck, da während des Schließvorganges der Schließkörper direkt in den Ventilsitz fällt und nicht erst über die eigentliche Dichtfläche 28 in den Dichtsitz geschoben wird. Bei horizontalem Einbau muss die Ventilspindel den Schließkörper erst in den Dichtsitz schieben, da der frei bewegliche Schließkörper immer entsprechend der Schwerkraft eine seitliche Lagerposition einnimmt.

Zusätzlich nimmt das Ventil bei vertikaler Position und oberem Pneumatikraum eine häufig vom Anwender gewünschte Doppelfunktion wahr. Die Funktionen sind a) die Funktion des gesteuerten Absperrventils und b), wie bereits oben beschrieben, die Funktion des Rückschlagventils.

Die Doppelfunktion des Ventils wird aufgehoben, wenn das Ventil so positioniert wird, dass der Pneumatikraum unterhalb des Prozessraumes liegt, also das Ventil um 180 Grad gewendet moniert wird.

Bei Änderungen des Designs könnte eine horizontale Einbaulage verschleißmindernd realisiert werden.

Der Abschnitt des Durchflusskanals, der zur Aufnahme des frei beweglichen Schließkörpers dient, müsste mit vertikalen Führungsstegen oder -kanten versehen werden. Die Führungsstege würden den Schließkörper nicht mehr frei beweglich, d.h. freie Bewegung in allen räumlichen Achsen, sondern nur eine Vertikal-Bewegung zulassen (so sind alle Rückschlagventile aufgebaut).

Kugelventile sind federbelastete Schließkörper, wo die freie räumliche Bewegungsfähigkeit des Schließkörpers eingeschränkt ist. Deshalb ist auch Gegenstand der Erfindung die Verwendung des Ventils als Sicherheitsventil, Überströmventil, Rückschlagventil oder handbetätigte Armatur.

Weiterer Gegenstand der Erfindung ist eine Blockarmatur die mindestens zwei erfindungsgemäße Ventile aufweist, dadurch gekennzeichnet, dass die Ventile eine gemeinsame Gehäuseplatte aufweisen und einen mehrteiligen Ventilkörper haben.

Weiterer Gegenstand der Erfindung ist eine Blockarmatur die mindestens zwei erfindungsgemäße Ventile aufweist, dadurch gekennzeichnet, dass die Ventile eine gemeinsame Gehäuseplatte, eine gemeinsame Grundplatte und/oder eine gemeinsame Kopfplatte aufweisen.

Die Erfindung wird nachstehend anhand der Figuren beispielhaft näher erläutert:

Es zeigen:
- Fig. 1: eine Schnittdarstellung durch das Ventil mit allen Einzelteilen
- Fig. 1 a: wie Fig. 1 ohne Gewindering
- Fig. 2: verschiedene Ausführungsformen des Schließkörpers und der Vertiefung im Ventilsitz

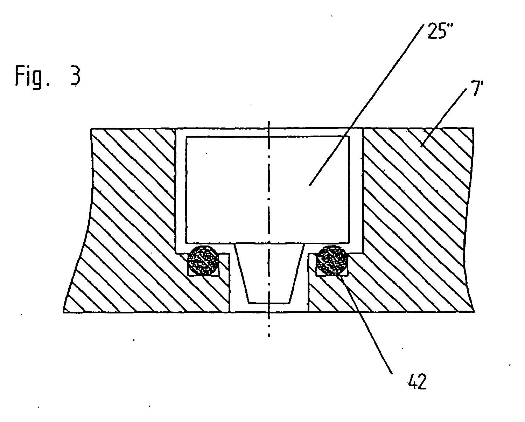

- Fig. 3: einen Schließkörper mit elastischer Dichtung und Ventilsitz
- Fig. 4: ein modifiziertes Ventil als federbelastetes Überströmventil
- Fig. 5: mehrere Ventile, die z.B. eine gemeinsame Gehäuseplatte besitzen und verschiedene Funktionen wahrnehmen
- Fig. 5a: mit Feder 41b) für die Funktion "bei Steuerluft-Ausfall öffnend".

In den Figuren werden die Bezugszeichen wie folgt zugeordnet:

### (Bezugszeichenliste)

- 1: Kopfplatte
- 2;2': Gehäuseplatte
- 3: Kolben
- 4: Verschlussplatte
- 5: Zentrierplatte
- 6: Grundplatte
- 7: Ventilsitz
- 8: Gehäuse des Ventilsitzes
- 9: Gewindering der Verstellschraube
- 10: Verstellschraube
- 11: Dichtung der Verstellschraube
- 12: Kolbendichtung
- 13: Kolbenspindel - Dichtung
- 14: Äußere Verschlussplatten - Dichtung
- 15: Zentrierplattendichtung zum Gehäuse
- 16: Ventilspindel - Dichtung der Zentrierplatte
- 17: Obere Ventilsitz - Dichtung
- 18: Untere Ventilsitz - Dichtung
- 19: Dichtung zwischen Grundplatte u. Ventilsitz- Gehäuse
- 20: Konzentrische Nut zur Aufnahme einer Feder mit ZU - Wirkung
- 21: Konzentrische Nut zur Aufnahme einer Feder mit AUF - Wirkung
- 22: Runder Bolzen an der Verstellspindel
- 23: Ringspalt
- 24: Schrauben
- 25-25"': Beweglicher Schließkörper
- 26: Energie - Anschluss
- 27: Energie - Anschluss
- 28: Zuleitung in der Grundplatte
- 29: Ableitende Bohrung im Gehäuse
- 30: Radiale Gehäusebohrung
- 31: Ventilspindel oder Kolbenspindel
- 32: obere Pneumatikraum
- 33: untere Pneumatikraum
- 34: Radiale Bohrung der Zentrierplatte
- 35: Umlaufende Nut der Zentrierplatte
- 36: Bohrung (Senkung, Vertiefung) zur Aufnahme des Schließkörpers
- 37: Zuführende Bohrung
- 38: Konische konzentrische Dichtfläche im Ventilsitz
- 40: Überströmventil
- 41: Druckfeder (Überströmventil) mit Federkraft 1
- 41': Druckfeder mit Federkraft 2
- 42: Innere Ventilsitz-Dichtung
- 43: Scheibe
- 44: Filtergewebe

### Beispiele

### Beispiel 1

In Fig. 1 ist ein Ventil mit integriertem pneumatischen Verstellantrieb in einer Schnittdarstellung gezeigt. Das Ventil hat drei Hauptplatten, die Kopfplatte 1, die Gehäuseplatte 2 und die Grundplatte 6. Alle Platten werden z.B. mit vier Schrauben 24 zusammen gehalten.

Die Kopfplatte 1 hat im Innern eine abgesetzte Bohrung. Die Bohrung bildet den Hohlraum 32, 33, im folgenden Pneumatikraum genannt. Der Pneumatikraum 32, 33 der Kopfplatte 1 schafft Raum für die Aufnahme eines Kolbens 3 mit einseitig ansitzender Ventilspindel 31. Der Kolben 3 hat auf seinem Umfang eine Nut zur Auf nahme der elastischen Kolbendichtung 12. Die Kolbendichtung 12 und der Kolben 3 teilt den Pneumatikraum 32, 33 in einen unteren Hohlraum 33 und einen oberen Hohlraum 32 (auch unterer bzw. oberer Pneumatikraum genannt).

Der untere Pneumatikraum 33 schließt mit einer zentrierenden Verschlussplatte 4 ab und wird mit einer zugehörigen äußeren Dichtung 14 zur inneren Bohrung der Kopfplatte 1 neu abgedichtet. Die Kolbenspindel - Dichtung 13 dichtet den unteren Pneumatikraum 33 zur Ventilspindel 31 ab, so dass der untere Pneumatikraum gegen Druck verschlossen ist.

Der obere Pneumatikraum 32 und der untere Pneumatikraum 33 haben jeweils zu- oder abführende Anschlüsse 26, 27 für Fluide, z.B. Pressluft. So kann wahlweise, je nach Auf- oder Zu-Stellung des Ventils die benötigte Verstellkraft, durch z.B. Druckluft von 6 bar, durch die Leitung 27 auf die jeweils wirksame untere oder durch Leitung 26 auf die obere Kolbenfläche geleitet werden, so dass der Kolben 3 mit der Ventilspindel 31 in die gewünschte Endstellung gedrückt wird.

Die Verschlussplatte 4 und die innen liegende Zentrierplatte 5 zentrieren die Kopfplatte 1 und die Gehäuseplatte 2 miteinander, so dass die am Pneumatikkolben 3 einseitig angesetzte Ventilspindel 31 im Zentrum des Ventilkörpers bis in den Durchflusskanal 28, 29 nahe dem beweglichen Schließkörper 25 (Stahlkugel) verlängert werden kann.

Die untere Ebene der Zentrierplatte 5 sitzt eng in der Gehäuseplatte 2 und der obere Bereich der Zentrierplatte 5 sitzt eng in der Verschlussplatte 4, so dass die Ventilspindel 31 mit der Dichtung 16 den produktberührten Raum des Ventilgehäuses (Durchflusskanal) abdichtet. Die Zentrierplatte 5 hat eine weitere Dichtung 15 zur Gehäuseplatte 2, um eine Bypass-Leckage zu verhindern. Oberhalb der Kolbenspindel-Dichtung 16 ist eine radiale Bohrung 34 vorgesehen, die in eine umlaufende Nut 35 mündet. Die umlaufende Nut 35 grenzt an eine radiale Gehäuse-Bohrung 30. Dadurch wird der Abschnitt der Ventilspindel zwischen der Dichtungen 13 und der Dichtung 16 frei belüftet (Druckentlastungsraum). Dadurch kann bei Ausfall der Ventilspindeldichtungen 13, 16 ein entstehender Druck direkt entspannt werden. Auch besteht für den Anwender die Möglichkeit die Dichtigkeit des Ventils zu überprüfen.

Die Gehäuseplatte 2 sitzt auf der Grundplatte 6 und hat in ihrem unteren Teil eine Bohrung für die Aufnahme des Ventilsitzes 7. Ist der Ventilsitz 7, wie im Beispiel nach Fig. 1 gezeigt, aus Kunststoff gefertigt, kann es erforderlich sein, den Ventilsitz 7 aus Kunststoff, insbesondere bei hohen Prozess-Drücken, mit einem zusätzlichen Gehäuse 8 zu kammern. Der Ventilsitz 7 hat eine obere mittige Bohrung 36 zur Auf nahme des freibeweglichen Schließkörpers 25 und in Verlängerung der Bohrungsachse eine angrenzende kleinere Bohrung 37, durch die der durchströmende Stoff von der Zuleitung 28 geleitet wird. Im Übergangsbereich der Bohrungen 36, 37 ist eine konische, konzentrische Dichtfläche 38 ausgebildet, damit sich der Schließkörper mittig zentrieren und abdichten kann. Der Ventilsitz ist hier eine Scheibe, die auf der oberen Ebene eine Dichtung 17 hat, die zur Gehäuseplatte 2 eine Bypass-Strömung verhindert. Zwischen Ventilsitz 7 und umschließenden Gehäuse 8 ist eine weitere Dichtung 18 platziert.

Die Grundplatte 6 ist mit der Dichtung 19 zum Gehäuse 8 des Ventilsitzes 7 abgedichtet, so dass ein anstehender Druck in der Ventilzuleitung 28 den Ventilsitz 7 passieren muss, um durch die ableitende Bohrung 29 im Gehäuse 2 das Ventil verlassen zu können. Der Durchflusskanal wird hier durch die Leitungen 28, 29 und die Bohrungen 36, 37 gebildet.

In der vertikalen Achse der Kopfplatte 1 ist zusätzlich eine Gewindebohrung vorgesehen um einen Gewindering 9 aufzunehmen. Dieser Ring 9 dient zur Aufnahme der Verstellspindel 10 mit abgesetztem runden Bolzen 22 Der Bolzen 22 erstreckt sich bis in den oberen Pneumatikraum und ist mit der Dichtung 11 nach außen abgedichtet. Die Verstellspindel mit abgesetztem Bolzen bildet den oberen Anschlag für die Kolbenbewegung und begrenzt durch die am Kolben 3 sitzende Ventilspindel 31 den maximalen Öffnungsweg des freibeweglichen Schließkörpers. Den unteren Anschlagpunkt des freibeweglichen Schließkörpers bildet die konisch konzentrische Dichtfläche 38. Der untere Anschlagpunkt ist die ZU-Stellung und der obere Anschlagpunkt ist die ALTF-Stellung des Ventils.

Das Ventil funktioniert folgendermaßen: Bei anstehendem Prozessdruck in der zuleitenden Bohrung oder Kanal 28 der Grundplatte 6, wird ein Durchströmen des Ventils verhindert, wenn im oberen Pneumatikraum 32 über den Energieanschluss 26 z.B. Druckluft ansteht und eine entsprechende Schließkraft aufgebracht wird. Die Druckluft bzw. die daraus resultierende Schließkraft bewirkt das Herunterdrücken des Pneumatikkolbens 3 mit angesetzter Ventilspindel 31, so dass die untere Fläche der Ventilspindel 31 mit der anstehenden Kraft des Kolbens 3 den freibeweglichen Schließkörper 25 in den konzentrischen Dichtsitz 38 drückt. Die wirkende Kraft auf den Pneumatikkolben ist größer als die anstehende Druckkraft unterhalb des Schließkörpers, die über die Zuleitung 28 wirkt. Wird die Druckluft nun auf den unteren Pneumatikraum 33 geschaltet und gleichzeitig der obere Pneumatikraum 32 entspannt, hebt sich der Pneumatikkolben 3 bis er die untere Fläche des Bolzens 22 der Verstellspindel 10 berührt. Gleichzeitig wird die Bewegungsmöglichkeit des frei beweglichen Schließkörpers 25 frei gegeben, so dass bei anstehendem Druck unter dem Schließkörper 25, dieser hochgedrückt wird und den Ventildurchgang 28, 29 öffnet. Das anstehende Produkt bzw. Medium kann nun den Schließkörper 25 umströmen, passiert den Ringspalt 23, der durch die runde Kolbenspindel und den größeren vertikalen Ableitkanal gebildet wird um dann in die ableitende Bohrung 29 des Gehäuses zu gelangen.

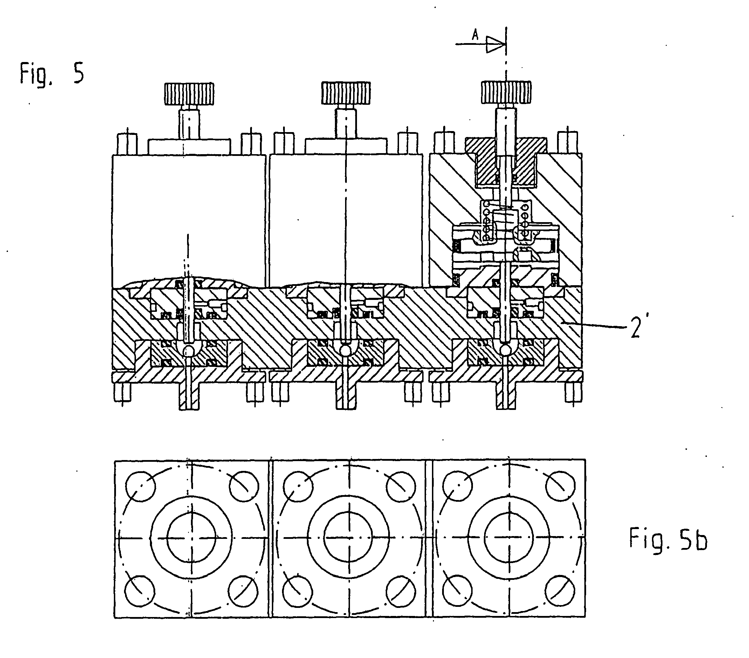

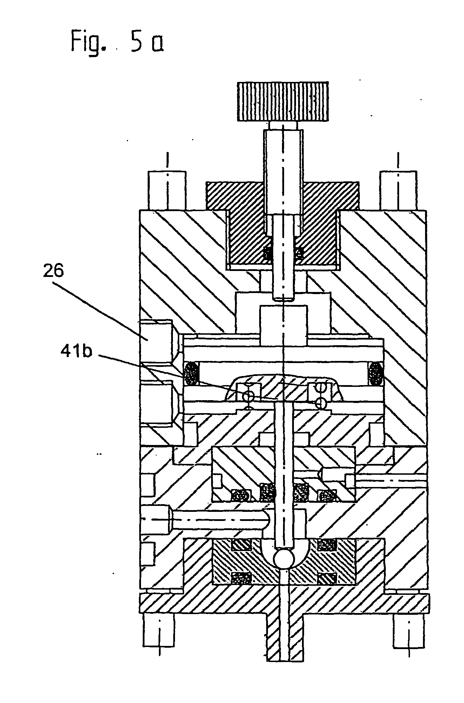

In besonderen Einsatzfällen werden steuerbare Ventile benötigt, die bei Steuerluftausfall in eine definierte Sicherheitsstellung schalten. Üblicherweise werden die Sicherheitsstellungen eines Ventils bei Steuerluftausfall AUF oder ZU gefordert. Der Kolben 3 mit einseitig angesetzter Ventilspindel 31 besitzt im oberen oder unteren Pneumatikraum eine konzentrische Nut 20, 21 zur wahlweisen Aufnahme einer Druckfeder 41 (vergl. Fig. 5). Eine montierte gespannte Druckfeder 41 im oberen Pneumatikraum 20 löst bei Ausfall der im unteren Pneumatikraum stehenden Steuerluft die Schließbewegung des Ventils aus. Sitzt die Druckfeder im unteren Pneumatikraum in der Aufnahmenut 21 erfolgt bei Ausfall der Steuerluft im oberen Pneumatikraum das Öffnen des Ventils mit Federkraft.

### Beispiel 2

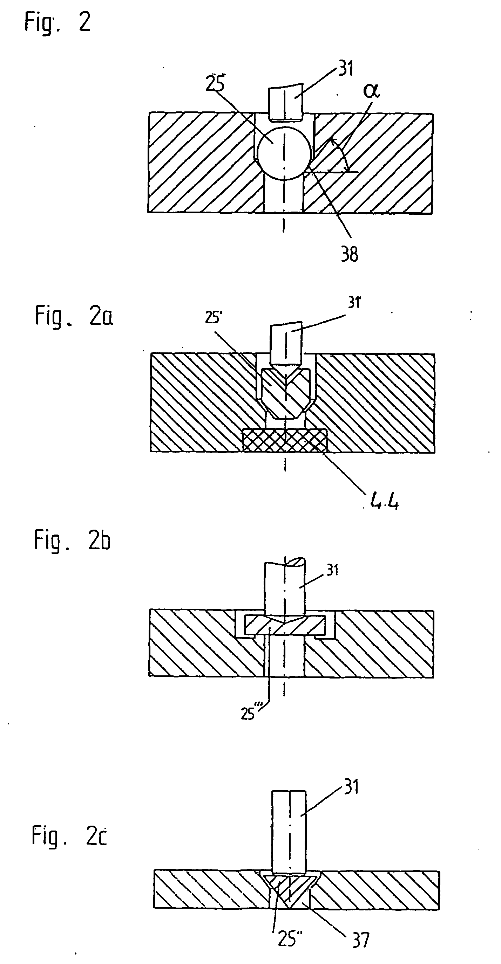

In den Figuren 2 bis 2c sind verschiedene Ausführungsformen des Ventildichtsitzes 7 in einem Ventil nach Fig. 1. dargestellt.
- Fig. 2: zeigt den Winkel α der konischen Dichtfläche 38, Schließkörper 25 und einen Teil der Ventilspindel 31 1
- Fig. 2 a: zeigt eine Ausführung mit kegelförmigem Schließkörper 25' und einem Zentrierdorn an der Ventilspindel 31'
- Fig. 2 b: zeigt einen plattenförmigen Schließkörper 25"' mit Zentrierdorn an der Ventilspindel 31 1
- Fig. 2 c: zeigt einen spitzen kegelförmigen Schließkörper 25" der im geschlossen Zustand überwiegend in den Zuführkanal 37 (Bohrung) hineinragt.

### Beispiel 3

Beispiel 3 zeigt einen alternativen Ventilsitz 7' für ein Ventil nach Fig. 1 mit einer elastischen inneren Ventilsitz-Dichtung 42. Der freibewegliche Schließkörper 25" hat die Form eines einseitig abgesetzten rotationssymmetrischen Zylinders mit angesetzten Führungskegel. Die Aufnahme-Bohrung für den Schließkörper 25" ist Teil des Ventilsitzes 7. Kommt eine innere elastische Dichtung im Ventilsitz 7' zum Einsatz, können Schließkörper und Ventilsitz aus gleichem Werkstoff sein.

### Beispiel 4

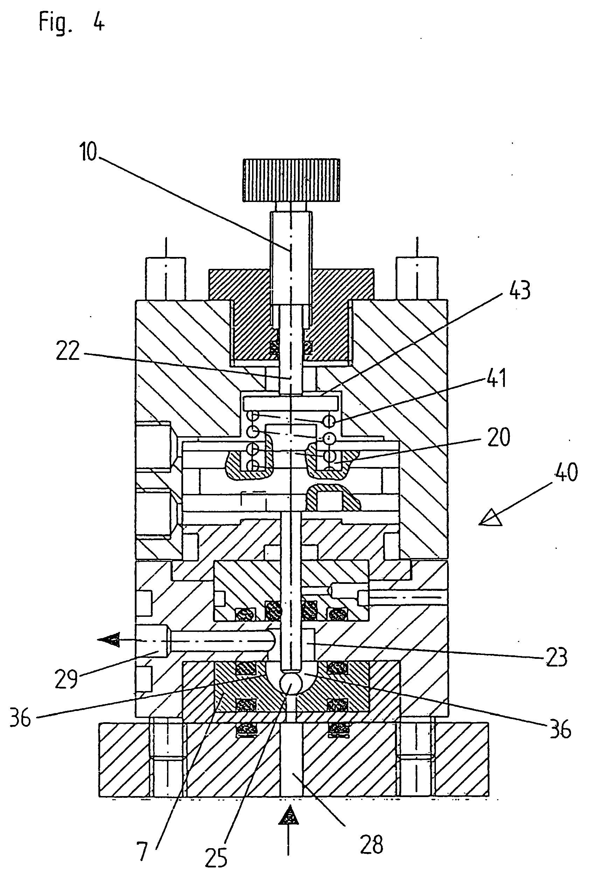

In Fig. 4 ist ein modular aufgebautes Ventil ähnlich wie in Beispiel 1 dargestellt, durch Hinzunahme einer Druckfeder 41, die z.B. in einer konzentrischen Nut 20 des Kolbens 3 teilweise geführt ist, und Einsetzen einer zusätzlichen Scheibe 43 und Weglassen der elastischen Dichtungen 12, 13, 14 im Pneumatikraum, als federbelastetes Überströmventil 40 umgerüstet. Die Vertiefung 36 im Ventilsitz 7 ist in der gezeigten Ausführung eine Kugelsenkung und der freibewegliche Schließkörper 25 hat eine Kugelform. Die eingesetzte Druckfeder 41 kann mit der Verstellschraube 10 auf eine gewünschte Öffnungskraft gespannt werden, so dass ein anstehender Druck im Zuführkanal 28 bei Überschreiten der Federkraft, die gespannte Feder 41 zusammendrückt, den Schließkörper 25 hochdrückt und die Dichtfläche 38 im Ventilsitz 7 für ein Durchströmen öffnet. Der Druck in der Zuleitung 28 kann nun durch den konzentrischen Ringspalt 23 zur ableitenden Bohrung 29 entspannen. Ist der anstehende Druck kleiner als die Federdruckkraft wird das Überströmventil 40 wieder geschlossen.

### Figur 5

In Fig. 5 sind mehrere modular aufgebaute Ventile zur Bildung einer Blockarmatur auf einer gemeinsamen Gehäuseplatte 2' platzsparend aufgebaut. In der rechten Montageposition ist ein Ventil, ähnlich wie in Beispiel 1 dargestellt, jedoch ist im oberen Pneumatikraum eine Druckfeder eingesetzt die bei Steuerluftausfall das Ventil in die Sicherheitsstellung ZU fährt. In Fig. 5b sind drei Ventile in der Draufsicht dargestellt.

Versuchsergebnisse mit erfindungsgemäßen Ventilen nach Figur 1 und verschiedenen bekannten Ventilen sind der nachstehenden Tabelle 1 zu entnehmen.

**Tabelle 1**

| Ventiltest | | | |
|---|---|---|---|
| Wasserstoff 300 bar | | | |
| Firma (Hersteller) | Typ | Schaltzyklen | Ergebnis: Versuchsabbruch/Sonstiges |
| | | | |
| Nupro | Faltenbalgventil* | 5 - 10 000 | Ventilsitz defekt |
| Parker | Membranventil* | 3 200 | Antriebsprobleme, defekt |
| | | | |
| Nupro Ventil modifiziert | Faltenbalgventil | 13 000 | ohne Faltenbalg mit O-Ringdichtung Ventilstößel klemmt im O-Ring |
| | | | |
| Hoke | Membranventil* | < 2 000 | Undicht im Ventildurchgang |
| | | | |
| Erfindungsgem. Ventil (Fig. 1) | | > 100 000 | Einwandfreier Betrieb und dicht |

| | | | |
|---|---|---|---|
| Von jedem Ventiltyp wurden mehrere Ventile (max. drei) gleichzeitig getestet um einen Einzelfehler am Ventil auszuschalten. Die gekennzeichneten Ventile sind nur bis 240 bar getestet worden (max. zugelassener Betriebsdruck). | | | |

## Patentansprüche

1. Ventil mit pneumatischem oder hydraulischem Antrieb mit einem das Ventilgehäuse (2, 6) durchsetzenden Durchflusskanal (28, 29), einem Ventilsitz (7) im Durchflusskanal (28, 29) und einem relativ zum Ventilsitz (7) beweglichen Verschlussmittel (31, 25), einem mit dem Verschlussmittel (31) verbundenen Kolben (3), der in einem Hohlraum (32, 33), insbesondere einem Zylinderraum (32, 33) beweglich geführt ist, sowie einer oberen Fluiddruckleitung (26), die mit dem oberen Hohlraumteil (32) und einer unteren Fluiddruckleitung (27), die mit dem unteren Hohlraumteil (33) verbunden ist, wobei das Verschlussmittel (31) durch eine Zentrierplatte (5) oberhalb des Durchflusskanals (28,29) durchgeführt ist, welche einen Druckentlastungsraum (34) und Dichtmittel, insbesondere Dichtungsringe (13, 16) aufweist, die den Druckentlastungsraum (34) vom Durchflusskanal (28, 29) und dem unteren Hohlraumteil (33) trennen, **dadurch gekennzeichnet, dass** das Ventil einen modularen plattenförmigen Aufbau aufweist, bei dem eine Kopfplatte (1) auf einer Gehäuseplatte (2) und diese wiederum auf einer Grundplatte (6) mittels lösbaren oder unlösbaren Befestigungsmittel montiert ist, wobei der Hohlraum mit dem Kolben in der Kopfplatte und der Druckentlastungsraum (34) sowie der Durchflußkanal (28,29) in der Gehäuseplatte (2) angeordnet sind.

2. Ventil nach Anspruch 1, **dadurch gekennzeichnet, dass** das Verschlussmittel (31) durch eine den unteren Hohlraumteil (33) verschließende Verschlussplatte (4) geführt ist, wobei die Zentrierplatte (5) mit ihrer Oberseite in der Verschlussplatte (4) und mit ihrer Unterseite in der Gehäuseplatte (2) sitzt, so dass durch Verschluß- und Zentrierplatte die Kopfplatte (1) und die Gehäuseplatte (2) miteinander zentriert sind.

3. Ventil nach einem der vorherigen Ansprüche, **dadurch gekennzeichnet, dass** das Verschlussmittel (31,25) gebildet ist aus einer Kombination aus Ventilspindel (31) und davon getrenntem Schließkörper (25).

4. Ventil nach einem der vorherigen Ansprüche, **dadurch gekennzeichnet, dass** die von den Druckfluiden mit Druck beaufschlagte Fläche des Kolbens (3) im Verhältnis zum Querschnitt der Fläche des Ventilsitzes (7) mindestens so groß bemessen ist, dass die Ventilspindel (31) bei Druckbeaufschlagung des oberen Hohlraumes (32) bei dem Druck im Einlassbereich (28) des Durchflusskanals (28, 29) entgegenwirkt.

5. Ventil nach einem der Ansprüche 1 bis 4, **dadurch gekennzeichnet, dass** die Dichtmittel (13) und (16), unabhängig voneinander als Weich-, insbesondere Gleitdichtung ausgebildet sind.

6. Ventil nach Anspruch 5, **dadurch gekennzeichnet, dass** als Material für die Dichtmittel (13) und (16) ein Elastomer, Silikon, Viton, Teflon oder ein EPDM-Kautschuk verwendet wird.

7. Ventil nach einem der Ansprüche 1 bis 6, **dadurch gekennzeichnet, dass** der Ventilsitz (7) vom Ventilgehäuse (2) lösbar angebracht ist.

8. Ventil nach einem der Ansprüche 1 bis 7, **dadurch gekennzeichnet, dass** im oberen Teil des Ventilgehäuses (1) eine Einstellschraube (10) vorgesehen ist, die den Hub der Ventilspindel (31) variierbar begrenzt.

9. Ventil nach Anspruch 8, **dadurch gekennzeichnet, dass** die Einstellschraube eine Mikrometerschraube ist.

10. Ventil nach einem der Ansprüche 1 bis 9, **dadurch gekennzeichnet, dass** im oberen Hohlraumteil (32) ein Federelement (41) angebracht ist, das auf die Ventilspindel (31) in Richtung des Ventilsitzes (7) wirkt.

11. Ventil nach einem der Ansprüche 1 bis 10, **dadurch gekennzeichnet, dass** im unteren Hohlraumteil (33) ein Federelement angebracht ist, das auf die Ventilspindel (31) entgegengesetzt zum Ventilsitz (7) wirkt.

12. Ventil nach einem der Ansprüche 1 bis 11, **dadurch gekennzeichnet, dass** die Dichtsitzfläche (38) des Ventilsitzes (7) eben oder insbesondere konisch verengt ausgeführt ist.

13. Ventil nach einem der-Ansprüche 1 bis 12, **dadurch gekennzeichnet, dass** der Schließkörper (25) als Kugel, Zylinder oder Kegel ausgeführt ist.

14. Ventil nach einem der Ansprüche 1 bis 13, **dadurch gekennzeichnet, dass** das Verhältnis der Querschnittsflächen des Kolbens (3) zur Querschnittsfläche der Ventilspindel (31) im Bereich des Ventilsitzes (7) <100, bevorzugt <50, besonders bevorzugt <20, beträgt.

15. Ventil nach einem der Ansprüche 1 bis 14, **dadurch gekennzeichnet, dass** die Bewegungslänge des Kolbens (3) auf höchstens 10 mm, bevorzugt höchstens 5 mm, besonders bevorzugt höchstens 1 mm, begrenzt ist.

16. Ventil nach einem der Ansprüche 1 bis 15, **dadurch gekennzeichnet, dass** der Schließkörper (25) in einer Vertiefung (36) des Ventilsitzes (7) angebracht ist, deren Höhe höchstens der zweifachen Höhe des Schließkörpers (25), bevorzugt höchstens der Höhe des Schließkörpers (25), besonders bevorzugt höchstens der halben Höhe des Schließkörpers (25) entspricht.

17. Ventil nach Anspruch 16, **dadurch gekennzeichnet, dass** der Durchmesser der Vertiefung (36) kleiner als der zweifache Durchmesser des Schließkörpers (25) ist.

18. Ventil nach einem der Ansprüche 1 bis 17, **dadurch gekennzeichnet, dass** die Dichtfläche (38) im Ventilsitz (7) konisch zulaufend ausgebildet ist und der Winkel a der Dichtfläche zur Horizontalen bis 70°, bevorzugt 30 bis 60°, besonders bevorzugt 40 bis 50°, beträgt.

19. Ventil nach einem der Ansprüche 1 bis 18, **dadurch gekennzeichnet, dass** der Ventilsitz (7) ein Material mit geringerer Härte aufweist als der Schließkörper (25).

20. Ventil nach einem der Anspräche 1 bis 19, **dadurch gekennzeichnet, dass** die Fluiddruckleitungen (26) und (27) mit Druckluft betrieben sind.

21. Ventil nach einem der Ansprüche 1 bis 20, **dadurch gekennzeichnet, dass** ein separierbares Filter- oder Siebgewebelement (44) im Bereich der Zuleitung vor dem Dichtsitz angebracht ist.

22. Verwendung des Ventils nach einem der Ansprüche 1 bis 21 als Sicherheitsventil, Überströmventil, Rückschlagventil oder handbetätigte Armatur.

23. Blockarmatur aufweisend mindestens zwei Ventile nach einem der Ansprüche 1 bis 20, **dadurch gekennzeichnet, dass** die Ventile eine gemeinsame Gehäuseplatte (2') aufweisen.

24. Blockarmatur nach Anspruch 23, **dadurch gekennzeichnet, dass** die Ventile zusätzlich eine gemeinsame Kopfplatte (1) und Grundplatte (6) aufweisen.

## Claims

1. Valve with pneumatic or hydraulic drive with a flow channel (28, 29) going through the valve housing (2, 6), a valve seat (7) in the flow channel (28, 29) and a means of closing (31, 25), which can be moved relative to the valve seat (7), a piston (3) connected to the means of closing (31), which can be moved in a cavity (32, 33), particularly a cylinder space (32, 33), and a top fluid pressure pipe (26), which is connected to the top cavity part (32), and a lower fluid pressure pipe (27), which is connected to the bottom cavity part (33), in which the means of closing (31) is taken through a centring plate (5) above the flow channel (28, 29), which has a pressure relief area (34) and means of sealing, particularly sealing rings (13, 16), which separate the pressure relief area (34) from the flow channel (28, 29) and the bottom cavity part (33), **characterised in that** the valve has a modular plate shaped structure, in which a head plate (1) is fitted to a housing plate (2) and this in turn is fitted to a base plate (6) by means of fastening which may or may not be detached, in which the cavity is arranged with the piston in the head plate and the pressure relief area (34) and the flow channel (28, 29) are arranged in the housing plate (2).

2. Valve according to claim 1, **characterised in that** the means of closing (31) is taken through a closing plate (4), which closes the bottom cavity part (33), in which the centring plate (5) sits with the top in the closing plate (4) and the bottom in the housing plate (2), so that the head plate (1) and the housing plate (2) are centred with each other though the closing and centring plate.

3. Valve according to one of the previous claims, **characterised in that** the means of closing (31, 25) is formed by a combination of valve rod (31) and closing body (25), which is separate from it.

4. Valve according to one of the previous claims, **characterised in that**, in relation to the cross section of the surface of the valve seat (7), the surface of the piston (3) subject to pressure from the pressure fluids is dimensioned at least so large that, when the top cavity (32) is subject to pressure, the valve rod (31) has a counteracting effect on the pressure in the inlet area (28) of the flow channel (28, 29).

5. Valve according to one of claims 1 to 4, **characterised in that** the means of sealing (13) and (16) are made as flexible, particularly sliding seals, independently of each other.

6. Valve according to claim 5, **characterised in that** elastomer, silicone, Viton, Teflon or an EPDM rubber are used as the material for the means of sealing (13) and (16).

7. Valve according to one of claims 1 to 6, **characterised in that** the valve seat (7) is fastened so that it can be detached from the valve housing (2).

8. Valve according to one of claims 1 to 7, **characterised in that** an adjusting screw (10) is provided in the top part of the valve housing (1), which limits the travel of the valve rod (31) in a variable way.

9. Valve according to claim 8, **characterised in that** the adjusting screw is a micrometer screw.

10. Valve according to one of claims 1 to 9, **characterised in that** a spring element (41) is fastened in the top cavity part (32), which acts on the valve rod (31) in the direction of the valve seat (7).

11. Valve according to one of claims 1 to 10, **characterised in that** a spring element is fastened in the bottom cavity part (33), which acts on the valve rod (31) in the opposite direction to the valve seat (7).

12. Valve according to one of claims 1 to 11, **characterised in that** the sealing seat surface (38) of the valve seat (7) is made flat or particularly conically tapered.

13. Valve according to one of claims 1 to 12, **characterised in that** the closing body (25) is made as a ball, cylinder or pin.

14. Valve according to one of claims 1 to 13, **characterised in that** the ratio of the cross section surfaces of the piston (3) to the cross section surface of the valve rod (31) in the area of the valve seat (7) is <100, preferably <50, particularly preferably <20.

15. Valve according to one of claims 1 to 14, **characterised in that** the length of movement of the piston (3) is limited to a maximum of 10 mm, preferably a maximum of 5 mm, particularly preferably a maximum of 1 mm.

16. Valve according to one of claims 1 to 15, **characterised in that** the closing body (25) is fastened in a depression (36) in the valve seat (7), the height of which is a maximum of twice the height of the closing body (25), preferably a maximum of the height of the closing body (25), particularly preferably a maximum of half the height of the closing body (25).

17. Valve according to claim 16, **characterised in that** the diameter of the depression (36) is less than twice the diameter of the closing body (25).

18. Valve according to one of claims 1 to 17, **characterised in that** the sealing surface (38) is made to run conically in the valve seat (7) and the angle a of the sealing surface to the horizontal is up to 70°, preferably 30 to 60°, particularly preferably 40 to 50°.

19. Valve according to one of claims 1 to 18, **characterised in that** the valve seat (7) has a material which is not as hard as that of the closing body (25).

20. Valve according to one of claims 1 to 19, **characterised in that** the fluid pressure pipes (26) and (27) are operated with compressed air.

21. Valve according to one of claims 1 to 20, **characterised in that** a filter or sieve cloth element (44), which can be separated, is fastened in the area of the pipe in front of the sealing seat.

22. Use of the valve according to one of claims 1 to 21 as a safety valve, overflow valve, non-return valve or manually operated valve.

23. Block valve with at least two valves according to one of claims 1 to 20, **characterised in that** the valves have a joint housing plate (2').

24. Block valve according to claim 23, **characterised in that** the valves also have a joint head plate (1) and base plate (6).

## Revendications

1. Soupape avec commande pneumatique ou hydraulique avec un canal d'écoulement (28, 29) traversant le carter de soupape (2, 6), un siège de soupape (7) dans le canal d'écoulement (28, 29) et un moyen de fermeture (31, 25) mobile par rapport au siège de soupape (7), un piston (3) relié au moyen de fermeture (31), qui est guidé de façon mobile dans une cavité (32, 33) en particulier un espace de cylindre (32, 33), ainsi qu'une conduite hydraulique supérieure (26) qui est reliée à la partie de cavité supérieure (32) et à une conduite hydraulique inférieure (27) qui est reliée à la partie de cavité inférieure (33), le moyen de fermeture (31) étant réalisé par une plaque de centrage (5) au-dessus du canal d'écoulement (28, 29), qui présente un espace de décompression (34) et des moyens d'étanchéité, en particulier des bagues d'étanchéité (13, 16) qui séparent l'espace de décompression (34) du canal d'écoulement (28, 29) et de la partie de cavité inférieure (33), **caractérisée en ce que** la soupape présente une construction modulaire en forme de plaque, dans laquelle une semelle de recouvrement (1) est montée sur une plaque de carter (2) et celle-ci est montée à son tour sur une plaque de base (6) au moyen de moyens de fixation fixes ou amovibles, la cavité avec le piston dans la semelle de recouvrement et l'espace de décompression (34), ainsi que le canal d'écoulement (28, 29) étant disposés dans la plaque de carter (2).

2. Soupape selon la revendication 1, **caractérisée en ce que** le moyen de fermeture (31) est dirigé par une plaque de fermeture (4) fermant la partie de cavité inférieure (33), la plaque de centrage (5) siège avec sa face supérieure dans la plaque de fermeture (4) et avec sa face inférieure se trouvant dans la plaque de carter (2), de sorte que la semelle de recouvrement (1) et la plaque de carter (2) sont centrées l'une par rapport à l'autre par la plaque de fermeture et la plaque de centrage.

3. Soupape selon l'une quelconque des revendications précédentes, **caractérisée en ce que** le moyen de fermeture (31, 25) est formé à partir d'une combinaison de tige de soupape (31) et de corps de fermeture (25) séparés de celle-ci.

4. Soupape selon l'une quelconque des revendications précédentes, **caractérisée en ce que** la surface du piston (3) pressurisée par les fluides de pression est dimensionnée suffisamment grande par rapport à la section transversale de surface du siège de soupape (7) de telle sorte que la tige de soupape (31) réagit, lors de la pressurisation de la cavité supérieure (32), avec la pression dans la zone d'admission (28) du canal d'écoulement (28, 29).

5. Soupape selon l'une quelconque des revendications 1 à 4, **caractérisée en ce que** les moyens d'étanchéité (13) et (16) sont configurés indépendamment les uns des autres en tant que joint souple, en particulier joint coulissant.

6. Soupape selon la revendication 5, **caractérisée en ce qu'**un matériau élastomère, en silicone, Viton, Teflon ou un caoutchouc EPDM est utilisé en tant que matériau pour les moyens d'étanchéité (13) et (16).

7. Soupape selon l'une quelconque des revendications 1 à 6, **caractérisée en ce que** le siège de soupape (7) est posé en étant détachable du carter de soupape (2).

8. Soupape selon l'une quelconque des revendications 1 à 7, **caractérisée en ce que** dans la partie supérieure du carter de soupape (1) est prévue une vis de réglage (10) qui limite de façon variable la course de la tige de soupape (31).

9. Soupape selon la revendication 8, **caractérisée en ce que** la vis de réglage est une vis micrométrique.

10. Soupape selon l'une quelconque des revendications 1 à 9, **caractérisée en ce que** dans la partie de cavité supérieure (32) est appliqué un élément de ressort (41) qui agit sur la tige de soupape (31) en direction du siège de soupape (7).

11. Soupape selon l'une quelconque des revendications 1 à 10, **caractérisée en ce que** dans la partie de cavité inférieure (33) est appliqué un élément de ressort qui agit sur la tige de soupape (31) dans le sens inverse du siège de soupape (7).

12. Soupape selon l'une quelconque des revendications 1 à 11, **caractérisée en ce que** la surface de siège d'étanchéité (38) du siège de soupape (7) est conçue plane ou en particulier coniquement rétrécie.

13. Soupape selon l'une quelconque des revendications 1 à 12, **caractérisée en ce que** le corps de fermeture (25) est conçu comme une sphère, un cylindre ou un cône.

14. Soupape selon l'une quelconque des revendications 1 à 13, **caractérisée en ce que** le rapport des surfaces de section transversale du piston (3) par rapport à la surface de section transversale de la tige de soupape (31) dans la zone du siège de soupape (7) est de préférence <100, de façon préférentielle <50, de façon particulièrement préférentielle <20.

15. Soupape selon l'une quelconque des revendications 1 à 14, **caractérisée en ce que** la longueur de déplacement du piston (3) est limitée au maximum à 10 mm, de façon préférentielle au maximum à 5 mm, de façon particulièrement préférentielle au maximum à 1 mm.

16. Soupape selon l'une quelconque des revendications 1 à 15, **caractérisée en ce que** le corps de fermeture (25) est posé dans un creux (36) du siège de soupape (7) dont la hauteur correspond au maximum au double de la hauteur du corps de fermeture (25), de préférence au maximum à la hauteur du corps de fermeture (25), de façon particulièrement préférentielle au maximum à la demi-hauteur du corps de fermeture (25).

17. Soupape selon la revendication 16, **caractérisée en ce que** le diamètre du creux (36) est inférieur au diamètre double du corps de fermeture (25).

18. Soupape selon l'une quelconque des revendications 1 à 17, **caractérisée en ce que** la surface d'étanchéité (38) dans le siège de soupape (7) est configurée avec une arrivée conique et l'angle a de la surface d'étanchéité vers l'horizontale est au maximum de 70°, de façon préférentielle de 30 à 60°, de façon particulièrement préférentielle de 40 à 50°.

19. Soupape selon l'une quelconque des revendications 1 à 18, **caractérisée en ce que** le siège de soupape (7) présente un matériau d'une dureté plus faible que celle du corps de fermeture (25).

20. Soupape selon l'une quelconque des revendications 1 à 19, **caractérisée en ce que** les conduites hydrauliques (26) et (27) fonctionnent avec de l'air comprimé.

21. Soupape selon l'une quelconque des revendications 1 à 20, **caractérisée en ce qu'**un élément tissulaire de filtre ou de tamis (44) séparable est posé dans la zone de conduite d'amenée précédant le siège d'étanchéité.

22. Utilisation de la soupape selon l'une quelconque des revendications 1 à 21 en tant que soupape de sécurité, soupape de trop plein, soupape de retenue ou robinet à commande manuelle.

23. Ensemble robinet comprenant au moins deux soupapes selon l'une quelconque des revendications 1 à 20, **caractérisé en ce que** les soupapes comprennent une plaque de carter (2') commune.

24. Ensemble robinet selon la revendication 23, **caractérisé en ce que** les soupapes comprennent en plus une semelle de recouvrement (1) et une plaque de base (6) communes.
